# EUROPEAN PATENT APPLICATION

(11) **EP 3 693 574 A1**
(43) Date of publication of application: **12.08.2020**
(21) Application number: 18864114.6
(22) Date of filing: 03.10.2018
(51) Int. Cl.: F02C 7/06, F01M 11/08

(54) **DRIVE UNIT BOX**

(30) Priority: 05.10.2017 RU 2017135497
(71) Applicant: Joint-Stock Company "United Engine Corporation" (JSC "EUC"), Moscow 105118 (RU)
(72) Inventor: STYAZHKOV, Konstantin Andreevich, Lys'va 618900 (RU); KHASANOV, Rafis Zafarovich, Perm' 614007 (RU); CHIRKOV, Artem Viktorovich, Perm' 614051 (RU)
(74) Representative: De Lorenzo, Danilo
(86) International application number: PCT/RU2018/000645
(87) International publication number: WO 2019/070159

(57) **Abstract**

The invention is related to the area of aviation engine building, particularly, to the elements of the gas turbine engine lubrication system. Accessory gearbox containing a gear, a branch pipe, bearings, a centrifugal impeller with blades. The centrifugal impeller with the blades contains a shell with the potential formation of inner cavities, windows for the gas-oil mixture inlet and air outlet, the blades have different lengths and are located at the angles α and β to the gear rotation axis. Besides, the centrifugal impeller may contain curvilinear blades. Besides, the centrifugal impeller may contain at least two oil and air separation stages installed in series. The implementation of the invention proposed with the distinctive features above, in combination with the known features enables improvement of the assembly technology, reduction of the outline dimensions and weight of the accessory gearbox, improvement of the oil separation.

## Description

The invention is related to the area of aviation engine building, particularly, to the elements of the gas turbine engine (GTE) lubrication system.

The design of the centrifugal breather containing a housing with the axial-flow impeller is known (Patent RU No. 2551454, IPC F02C7/06 published on May 27, 2015). The disadvantage of the known breather is the external location of the centrifugal breather housing which, together with the fasteners attaching it to the accessory gearbox and oil bypass valve takes a substantial footprint area and does not enable compact positioning of the adjacent units thus increasing the outline dimensions and weight of the accessory gearbox (AGB). Besides, the presence of the oil-regulating thread in the breather housing increases the factory labor hours and fabrication cost.

The design of the centrifugal breather including a gear with the impeller mounted on it (Patent RU No. 2548228, IPC F02C7/06 published on April 20, 2015) is also known. The disadvantage of the known centrifugal breather is the external location of the centrifugal breather housing, which together with the fasteners attaching it to the AGB and nozzle for the gas-oil mixture injection takes a substantial footprint area and does not enable compact positioning of the adjacent units thus increasing the outline dimensions and weight of the AGB. The presence of the spiral groove oil-regulating thread in the breather housing also increases the factory labor hours and fabrication cost.

The closest to the invention proposed, in terms of the technical essence and technical result obtained, and selected by the authors as the prototype, is the accessory gearbox (Patent RU No. 2547539, IPC F02C7/06 published on April 10, 2015). The disadvantage of the prototype is the presence of the centrifugal breather housing (attached to the AGB) which, together with the fasteners attaching it to the AGB housing and oil bypass flange takes a substantial footprint area and does not enable compact positioning of the adjacent units thus increasing the outline dimensions and weight of the AGB.

The technical problem of the proposed invention is the improvement of the assembly technology, reduction of the accessory gearbox outline dimensions combined with the oil separation efficiency assurance.

The technical problem is solved due to the fact that the accessory gearbox containing a gear, a branch pipe, bearings, a centrifugal impeller with blades, as per the invention, the centrifugal impeller with the blades contains a shell with the potential formation of inner cavities, windows for the gas-oil mixture inlet and air outlet, the blades have different lengths and are located at the angles α and β to the gear rotation axis.

Besides, in accordance with the invention, the centrifugal impeller has curvilinear blades.

Besides, in accordance with the invention, the centrifugal impeller contains at least two oil and air separation stages installed in series.

In the invention proposed, as opposed to the prototype, the centrifugal breather (without the position) consisting of the gear and centrifugal impeller with blades, is located inside the AGB oil cavity; hereby, the centrifugal impeller contains a shell and windows for the gas-oil mixture inlet and separation, as well as oil discharge, with the potential formation of the inner cavities and different angular positions of the blades relative to the gear axis which improves the oil separation efficiency, simplifies the assembly technology at the expense of the reduction of the number of parts. The location of the centrifugal breather inside the accessory gearbox reduces the gearbox outline dimensions because the centrifugal breather is eliminated.
Fig. 1 shows the cross-sectional view of the accessory gearbox.
Fig. 2 shows the cross-sectional view of the centrifugal impeller.
Fig. 3 shows the cross-sectional side view of the centrifugal impeller.
Fig. 4 shows the centrifugal impeller with curvilinear blades.
Fig. 5 shows the centrifugal impeller with two stages of oil and air separation installed in series.

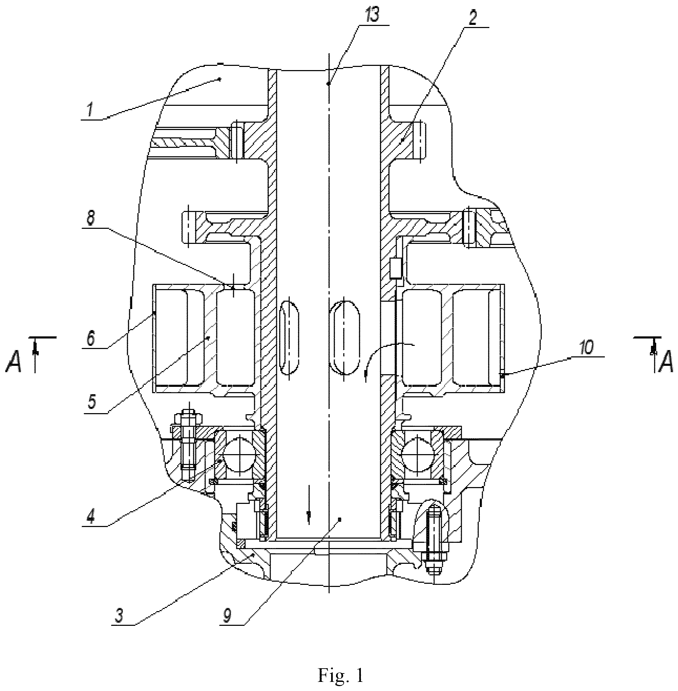

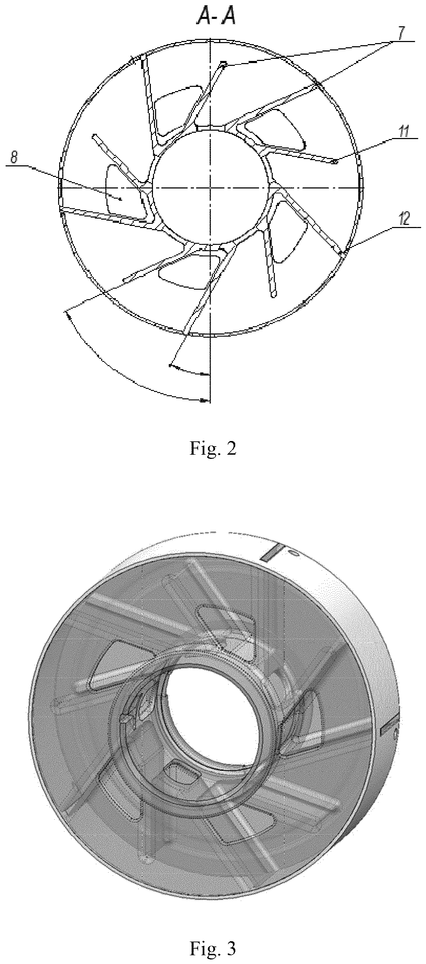

The accessory gearbox 1 (Fig. 1, Fig. 2, Fig. 3) contains gear 2, branch pipe 3, bearings 4, centrifugal impeller 5 with blades 7; the centrifugal impeller contains shell 6 with the potential of the cavity formation, as well as window 8 for the inlet of the gas-oil mixture, air outlet window 9 and openings for the discharge of the separated oil 10; the blades 7 of the impeller 5 are made in different lengths 11, 12 and located at the angles α and β to the rotation axis 13 of the gear 2.

The design of the accessory gearbox operates as follows.

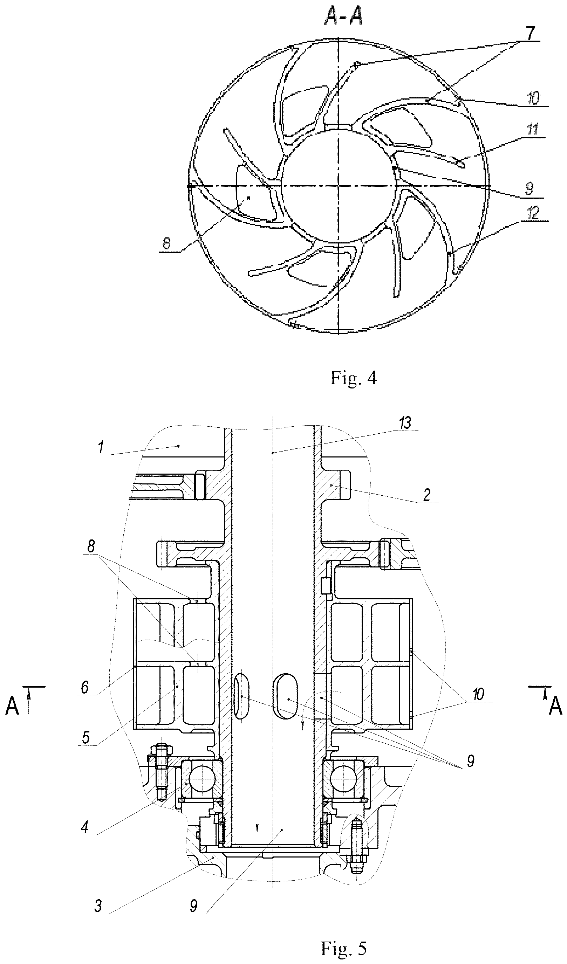

The centrifugal breather (no position) located in the housing 1 of the accessory gearbox contains the gear 2 with the centrifugal impeller 5 installed on it. The centrifugal impeller has the shell 6 and blades 7 of different lengths 11, 12 located at different angles α and β to the gear 2 axis which results in the formation of the adjacent interconnected cavities, the windows of which ensure inlet of the gas-oil mixture 8 from the AGB cavity, air 9 outlet and discharge of the separated oil via the openings 10. During the fairing of the "shorter" blade 11 walls with the flow of the gas-oil mixture the flow smoothly moves from the root part of the impeller blades to the periphery where the centrifugal force field intensity is higher and the process of the oil separation from the gases is more efficient. To discharge the separated oil, in the shell there are special openings 10 and on the impeller shaft there are openings 9 aligned with the openings in the gear 2, into which the air clean of oil is removed under the overpressure effect. Fig. 1 shows one stage of the oil and air separation. Due to the fact that the centrifugal breather (without position number) is located inside the oil cavity, on the outer surface of the AGB housing there is only branch 3 for the air outlet having substantially smaller outline dimensions than in case of the use of the centrifugal breather with the outer housing location. Thanks to this, on the outer surface the units may be located in a more compact manner which, in its turn, reduces the outline dimensions of the driven units. Besides, the centrifugal impeller may contain curvilinear blades (Fig. 4) that ensure the distance between the removed oil discharge opening from the air outlet window thus improving the oil separation. Besides, the centrifugal impeller may contain at least two stages of the oil and air separation located in series (Fig. 5) in which the air outlet windows of the first stage are the inlet windows of the second stage whereas at the last stage the air outlet windows are located on the centrifugal impeller shaft. In the shell of each stage there are openings for the oil discharge. This design also improves the oil separation.

Therefore, the implementation of the invention proposed with the distinctive features above, in combination with the known features enables improvement of the assembly technology, reduction of the outline dimensions and weight of the accessory gearbox, improvement of the oil separation.

## Claims

1. Accessory gearbox containing a gear, a branch, bearings, a centrifugal impeller with blades **characterized in that** the centrifugal impeller with blades contains a shell with the potential of formation of internal cavities, windows for the gas-oil mixture inlet and air outlet, the blades have different lengths and are located at the angles α and β to the gear rotation axis.

2. Accessory gearbox as per Claim 1 **characterized in that** the centrifugal impeller has curvilinear blades.

3. Accessory gearbox as per Claim 1 **characterized in that** the centrifugal impeller has at least two oil/ air separation stages installed in series.
